# EUROPEAN PATENT APPLICATION

(11) **EP 1 158 427 A2**
(43) Date of publication of application: **28.11.2001**
(21) Application number: 01300577.2
(22) Date of filing: 23.01.2001
(51) Int. Cl.: G06F 17/30

(54) **Apparatus for managing web site addresses**

(30) Priority: 24.05.2000 JP 2000153248
(71) Applicant: FUJITSU LIMITED, Kawasaki-shi, Kanagawa 211-8588 (JP)
(72) Inventor: Suda, Takashi, c/o Fujitsu Limited, Kawasaki-shi, Kanagawa 211-8588 (JP)
(74) Representative: Fenlon, Christine Lesley

(57) **Abstract**

A Web site address management apparatus (1) is disclosed that automatically executes updating of a URL list (22). The address management apparatus detects connection trials made by a browser for connection to Web sites, and records the number of instances of success in connection (instances of reference) and the number of continuous occurrences of connection failure with respect to each of URLs of the Web sites. If a URL addition condition is satisfied by the number of instances of reference in a predetermined time period with respect to one of the URLs, the address management apparatus (1) adds the URL to the URL list (22). If the number of instances of reference in a predetermined time period with respect to one of the URLs is smaller than a predetermined number, the address management apparatus (1) deletes the URL from the URL list (22). Further, when the number of continuous occurrences of connection failure with respect to one of the URLs becomes equal to a predetermined number, the address management apparatus (1) deletes the URL from the URL list (22).

## Description

### BACKGROUND OF THE INVENTION

### 1. Field of the Invention

The present invention relates to an apparatus for managing addresses of Web sites (World Wide Web (WWW) pages) and, more particularly, to an apparatus for managing a list in which addresses of Web sites in the form of a Uniform Recourse Locator (URL) are entered, and which is used by a WWW browser (Web browser).

### 2. Description of the Related Art

Recently, personal computers have come into wide use for ordinary households, and several enterprises have been organized that have announced plans to provide low-priced private lines for connection to the internet. An environment expected to further promote use of the internet is now being formed. One of major objects of use of the internet is to refer to or read various sorts of information at Web sites.

Web browsers have been provided as software for referring to Web sites on a computer monitor. A user can select and access a Web site by executing a Web browser on a computer to refer to information uploaded to the Web site. To access the Web site from which the user wishes to obtain information by using the Web browser, the user must input a URL, i.e., the address of the Web site.

Since URLs are each a sequence of letters and symbols, it is not easy for a user to remember URLs and to correctly input them. A solution of this problem is a browser function of registering URLs of Web sites to which a user wishes to refer. Most of the Web browsers have this function.

The URL registration function is a function of storing URLs and related names given by a user to the URLs. A user gives a name to a URL and registers the URL. The user calls up a list of registered URLs if necessary and selects one of the URLs by designating the corresponding name. Then the same processing as that in the case where the user inputs the URL is performed. That is, a trial is made for connection to the Web site corresponding to the designated URL.

For example, typical URL registration functions are "Favorites" of "Internet Explorer" produced by Microsoft Corporation and "Bookmarks" of "Netscape Navigator" produced by Netscape Communications Corporation. These URL registration functions hold a URL list in which registered URLs and names are stored by being related to each other, and provide a user with the contents of the URL list according to user's need.

The conventional Web browsers, however, have no function for automatically executing addition or deletion of URLs to a URL list held by the URL registration function. Therefore, it is necessary for a user to voluntarily perform a cumbersome process of updating a URL list (adding a URL to or deleting a URL from a URL list).

### SUMMARY OF THE INVENTION

In view of the above-described problem inherent in the conventional art, the present invention has been made, and therefore has an object thereof to provide a Web site address management apparatus capable of automatically updating a list of Web site addresses.

To achieve the above-described object, the present invention provides a Web site address management apparatus which monitors the state of references to Web sites made by a user, and which updates the contents of an address list containing the addresses of Web sites.

According to the present invention, a monitoring section and an updating section are provided to realize processing for automatically updating an address list (URL list) used by the URL registration function.

The address management apparatus of the present invention may also have a connection section for accessing to an address designated in the addresses contained in the address list. For example, the connection section is a Web browser.

The present invention may be formed separately from the Web browser and may alternately be formed as a portion of the Web browser.

The monitoring section records the state of references to the Web site by, for example, recording the frequency of access to the address of each of the Web sites by a user, and the updating section adds the address to the address list when the access frequency becomes equal to a predetermined threshold value.

Also, the monitoring section records, as the state of references to the Web site, the frequency of access to the address of each of the Web sites by a user, and the updating section deletes, from the address list, the address contained in the address list if the access frequency of the address is smaller than a predetermined threshold value.

Also, when the number of occurrences of failure in access to one of the addresses entered in the address list becomes equal to a predetermined threshold value, the updating section deletes the address from the address list. Thus, processing for automatically updating the address list used by the URL registration function is executed.

The Web site address management apparatus of the present invention can automatically execute updating of a Web site address list. Therefore, it is possible to provide a more comfortable internet or intranet utilization environment for users.

### BRIEF DESCRIPTION OF THE DRAWINGS

Other objects and advantages of the present invention will become apparent during the following discussion in conjunction with the accompanying drawings in which:
Fig. 1 is a diagram showing the hardware construction of an address management apparatus in a first embodiment of the present invention;
Fig. 2 is a functional block diagram of address management apparatus;
Fig. 3 is a diagram showing an example of a display of a URL list;
Fig. 4 is a diagram showing an example of a display of another URL list;
Fig. 5 is a diagram for explaining a frequency information table;
Fig. 6 is a diagram for explaining an addition/deletion condition list;
Fig. 7 is a diagram for explaining setting of the addition/deletion condition list;
Fig. 8 is a flowchart of an example of the operation of the address management apparatus;
Fig. 9 is a flowchart of another example of the operation of the address management apparatus;
Fig. 10 is a flowchart of still another example of the operation of the address management apparatus; and
Fig. 11 is a functional block diagram of an address management apparatus in a second embodiment of the present invention.

### DESCRIPTION OF THE PREFERRED EMBODIMENTS

Embodiments of the present invention will be described with reference to the accompanying drawings.

### First Embodiment

### <Hardware Construction of Address Management Apparatus>

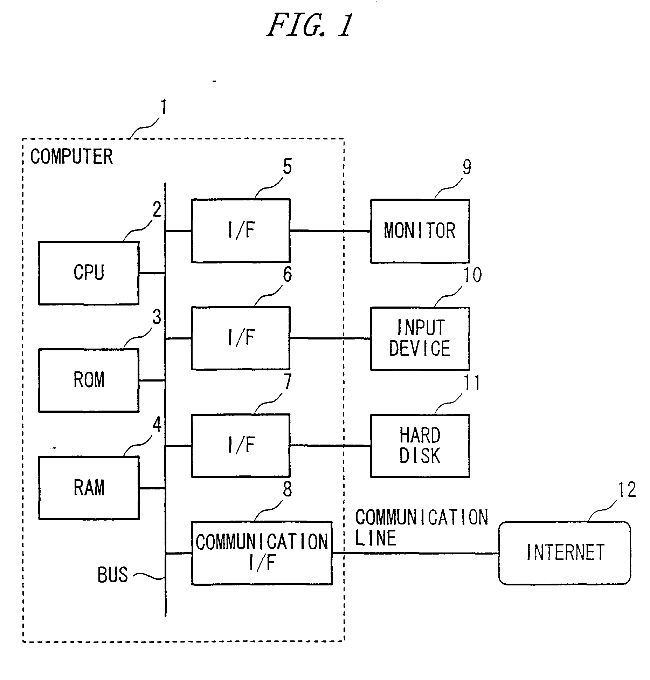

Fig. 1 shows the configuration of a computer 1 for realizing a Web site address management apparatus in a first embodiment of the present invention. The computer 1 has, as shown in Fig. 1, a central processing unit (CPU) 2, a read only memory (ROM) 3, a random access memory (RAM) 4, an interface circuit (I/F, e.g., a graphic board) 5, an I/F 6, an I/F 7, and a communication I/F (communication controller) 8.

A monitor (display unit) 9 is connected to the I/F 5. The monitor 9 is constituted by a cathode ray tube (CRT) or a liquid crystal display (LCD). An input device 10 is connected to the I/F 6. The input device 10 comprises some of a keyboard, a mouse, a joystick, a track ball, a flat space, etc. A hard disk (and a hard disk drive) 11 is connected to the I/F 7. The communication I/F 8 is connected to a network 12, e.g., the internet via a communication line.

The ROM 3 stores a boot-up program. The boot-up program is executed by the CPU 2 when the power supply for the computer 1 is turned on. Necessary programs stored in the hard disk 11, i.e., an operating system (OS) and a driver or a plurality of drivers for display processing and communication processing, are loaded to the RAM 4 to execute various kinds of processing or control.

Programs for controlling the computer 1 are stored in the RAM 4. The RAM 4 holds results of processing performed in accordance with the programs, data temporarily formed during processing, display data for displaying processing results or the like on the screen of the monitor 9, etc. The RAM 4 is also used as a work area for the CPU 2.

Display data stored in the RAM 4 is transmitted to the monitor 9 through the I/F 5. The monitor 9 displays on its screen the contents of a display corresponding to the display data.

The hard disk 11 is a recording medium on which various programs, including programs for realizing the address management apparatus of the present invention, control data, text data, image data, etc., are stored. Data writing to or reading from the hard disk 11 is executed by a hard disk drive (not shown).

The communication I/F 8 operates in accordance with instructions from the CPU 2 for execution of data exchange by transmission with an external unit (e.g., a network server) and uploading or downloading of a program or data via the communication line connected to the computer 1.

The input device 10 is operated by a user (operator) of the computer 1 to input data and commands to the computer 1.

The CPU 2 executes various programs recorded on the hard disk 11. The computer 1 thereby realizes a monitoring section, an updating section, a connection section and a provision section as functional sections of the Web site address management apparatus in accordance with the present invention.

The internet (or an intranet or the like) 12 is connected to a plurality of servers for providing Web sites. When the internet 12 receives a URL from the computer 1, it connects the computer 1 and the server corresponding to the URL. The server then provides information from the Web site corresponding to the URL to the computer 1.

### <Configuration of Address Management Apparatus>

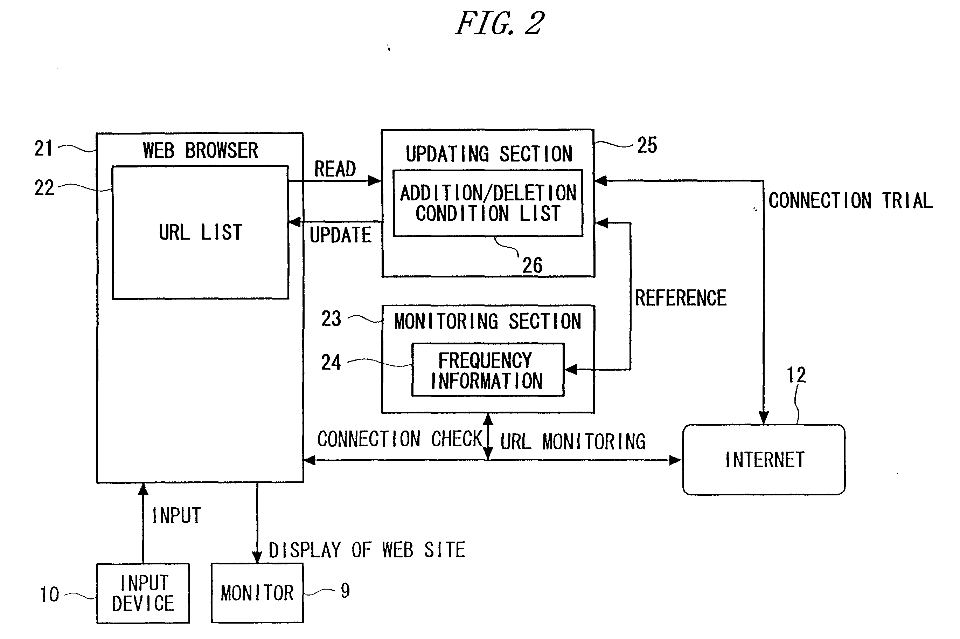

Fig. 2 is a block diagram showing the functions of the address management apparatus in the first embodiment. The functions are realized by the computer 1 shown in Fig. 1. The CPU 2 executes the programs to provide the computer 1 with a Web browser 21 (hereinafter referred to as "browser 21"), a URL list 22, a monitoring section 23, a frequency information table 24, an updating section 25, and addition/deletion condition list 26, and the computer 1 functions as an address management apparatus for supporting the browser 11, to which the monitor 9 and the input device 10 are connected.

Browser 21 is a function realized by execution of a browser program held on the hard disk 11, and corresponds to the connection section of the present invention. Browser 21 connects the computer 1 to the internet 12 in accordance with a command input by a user through the input device 10, accesses a designated URL for a Web site through the internet 12, obtains information uploaded to the Web site by downloading, and displays the information on the monitor 9.

When a user accesses a URL of a Web site, he or she performs a basic operation consisting of inputting the URL of the desired Web site in a URL input section displayed on the monitor 9 and pressing an enter key. Then, browser 21 tries to establish a connection to the URL. Also in a case where the user clicks a URL in a Hyperlink setting displayed on the monitor 9, browser 21 tries to establish a connection to the URL.

Browser 21 also comprises a URL registration function. That is, when browser 21 receives a URL registration command from the user while a Web site is being displayed on the monitor 9, it recommends the user to enter the name of the Web site and the URL by relating them to each other. In this registration, the user may give any name instead of the existing name of the Web site. Thereafter, when the user clicks a registration button displayed on the monitor 9, browser 21 stores the name selected by the user and the URL with relating them each other. URL information registered in this manner is held in URL list 22.

For example, if browser 21 is the "Internet Explorer" of Microsoft Corporation, "Favorites" corresponds to the URL registration function. When the user designates "Favorites" in the menu bar on the display screen while a Web site is being displayed on the monitor 9, menu items "Add to Favorites" and "Organize Favorites" are displayed.

When the user selects "Add to Favorites" in these menu items, a URL registration window is displayed. This registration window includes a name input section and an "OK" button. In the name input section, a prepared name of the Web site is displayed, and the user can also input any name according to his or her preference in place of the prepared name.

When the user clicks "OK" button, the URL is registered. That is, browser 21 forms a text file (extension: url) in a certain format corresponding to information of the registered URL, and stores the text file in a folder corresponding to the URL list on the hard disk 11. A text file corresponding to URL information is formed and stored with respect to each of registered URLs.

If browser 21 is the "Netscape Navigator" of Netscape Communications Corporation, "Bookmarks" corresponds to the URL registration function. Also in this case, the user can register a URL by generally the same operation as that performed in the case of "Internet Explorer". However, information on all URLs registered by "Netscape Navigator" is written in a file "bookmark.htm" corresponding to URL list 22 on the hard disk 11.

After URL registration, the user can select any of the Web sites through the list of registered URLs by operating the input device 10 to refer to or read information from the Web site. For example, if the browser 21 is the "Internet Explorer", the user designates "Favorites" displayed on the monitor 9. If the browser 21 is the "Netscape Navigator", the user designates "Bookmarks" displayed on the monitor 9. Browser 21 then displays on the monitor 9 a list of names related to the URLs registered in URL list 22.

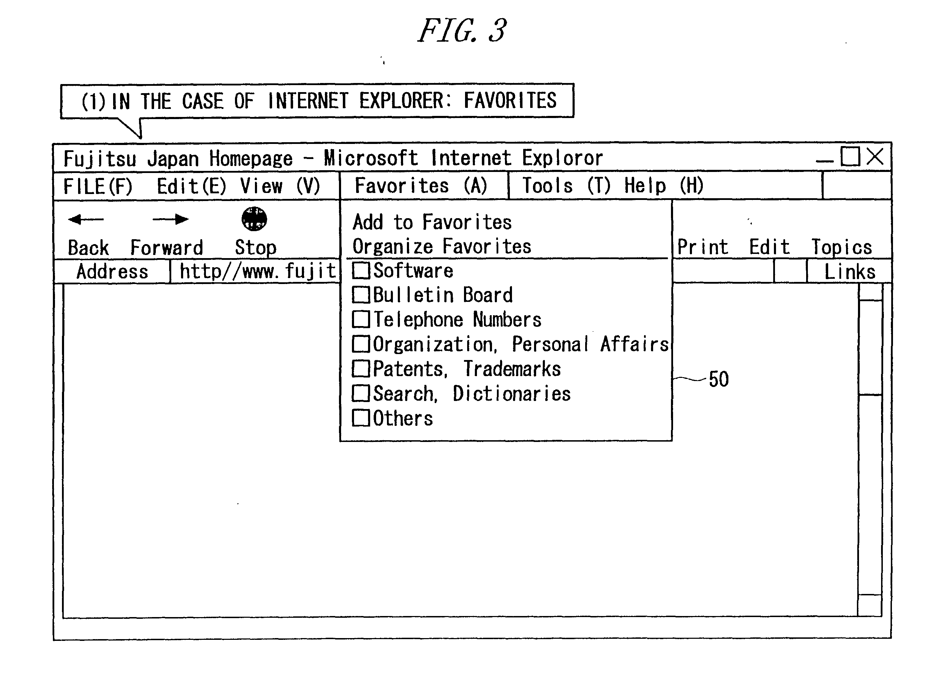

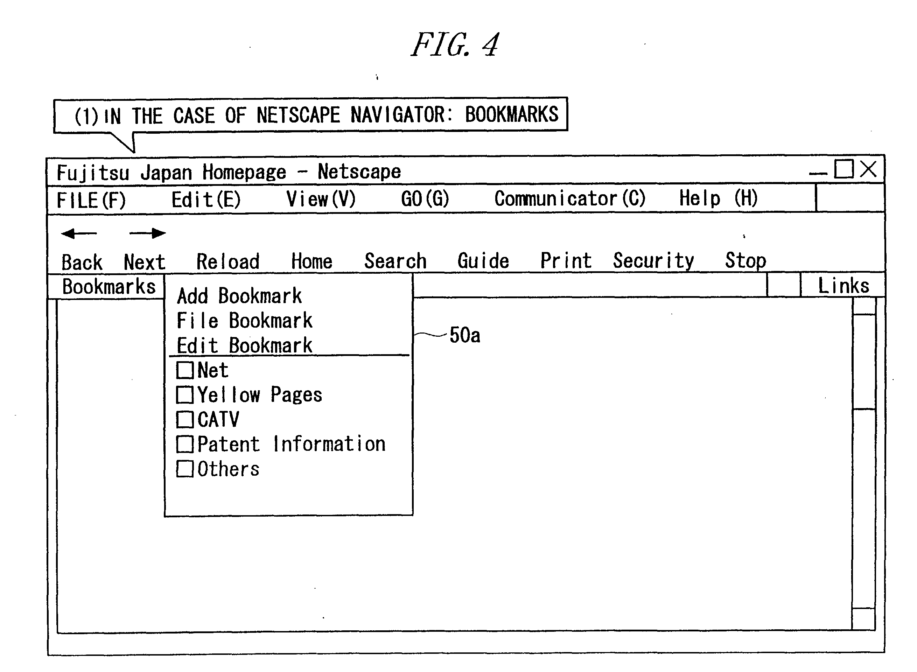

Fig. 3 shows an example of a display of a list 50 of names in the case where the browser 21 is the Internet Explorer, and Fig. 4 shows an example of a display of a list 50a of names in the case where browser 21 is the Netscape Navigator.

When the user selects one of the URL names in the list 50 or 50a as shown in Fig. 3 or 4, browser 21 tries to establish a connection according to the URL relating to the name. Thereafter, if the result of this trial is successful in establishing the desired connection, browser 21 downloads information of the Web site corresponding to the URL, and displays the information on the monitor 9, thereby enabling the user to refer to or read the information from the Web site.

Referring again to Fig. 2, monitoring section 23 is a function realized by the CPU 2 executing a program. Monitoring section 23 monitors the state of a user referring to Web sites with using browser 21. That is, monitoring section 23 monitors URLs to which browser 21 tries to establish a connection, and confirms the result of the trial (success or failure of connection).

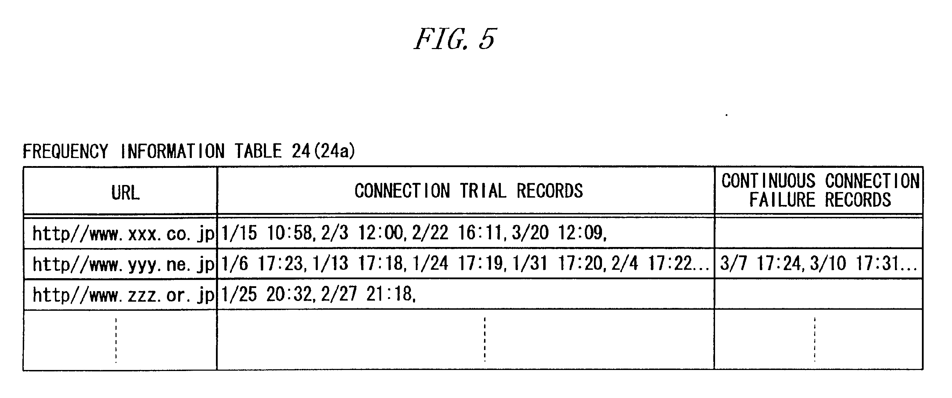

Monitoring section 23 forms a frequency information table 24 (hereinafter referred to as "table 24") on the basis of the results of the above-described monitoring. Fig. 5 shows an example of table 24. As shown in Fig. 5, table 24 contains "connection trial records" and "continuous connection failure records" with respect to URLs to which connection has been tried.

In a case where browser 21 has tried to establish a connection to a certain URL and has succeeded in establishing the connection, and if this is the first establishment of the connection, monitoring section 23 records the URL in table 24 and also records the date of the connection trial in the "connection trial records" in table 24 by relating it to the URL. With respect to the second or other subsequent trials for connection to the URL with successful results, monitoring section 23 records the date of the connection trial at corresponding positions in the "connection trial records" in table 24.

If the result of the trial made by browser 21 is a failure in establishing the connection to the URL, monitoring section 23 records the date in the "continuous connection failure records" by relating it to the URL. If the result of another trial thereafter made is success in establishing the connection, monitoring section 23 deletes recorded dates of failure from the "continuous connection failure records". If the result of the subsequent trial is a failure, monitoring section 23 enters the date in the "continuous connection failure records". Fig. 5 shows a case where trials for connection to a URL "http://www.yyy.ne.jp" resulted in failure continuously on the 7th and 10th of March.

Referring again to Fig. 2, updating section 25 is a function realized by the CPU 2 executing a program. Updating section 25 executes updating of URL list 22 (addition of URLs to URL list 22 or deletion of URLs from URL list 22) on the basis of the "connection trial records" and "continuous connection failure records" stored in table 24.

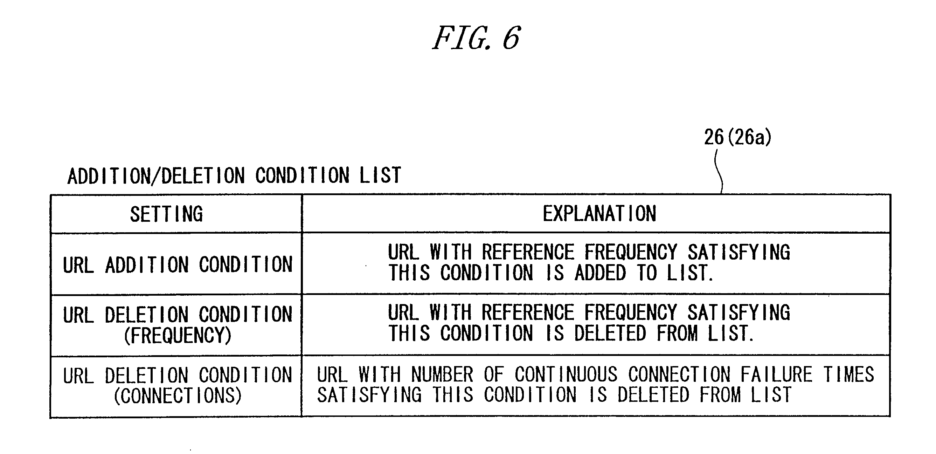

Updating section 25 has addition/deletion condition list 26 (hereinafter referred to as "condition list 26") with respect to updating of URL list 22. Fig. 6 shows an example of condition list 26. As shown in Fig. 6, condition list 26 contain a URL addition condition, a URL deletion condition (frequency), and another URL deletion condition (connections).

The URL addition condition is a condition for adding (newly registering) a URL with a high reference frequency to URL list 22. Updating section 25 refers to the "connection trial record" of each URL in table 24 to check whether the number of instances of success in establishing a connection to the URL in a predetermined period of time (the frequency of reference to the Web site) satisfies the URL addition condition in condition list 26. If the condition is satisfied, updating section 25 adds the URL to URL list 22.

The URL deletion condition (frequency) is a condition of deletion of a URL with a low reference frequency from URL list 22. Updating section 25 determines, by referring to the "connection trial record" of each URL in table 24, whether the number of trials that have succeeded in establishing a connection to the URL in the predetermined period of time (Web site reference frequency) satisfies the URL deletion condition (frequency) in condition list 26. If the condition is satisfied, updating section 25 deletes the URL from URL list 22.

The URL deletion condition (connections) is a condition of deletion of the URL of a relocated or extinguished Web site from URL list 22. Updating section 25 determines, by referring to the "continuous connection failure records" of each URL in table 24, whether the number of continuous occurrences of connection failure satisfies the URL deletion condition (connections) in condition list 26. If the condition is satisfied, updating section 25 deletes the URL from URL list 22.

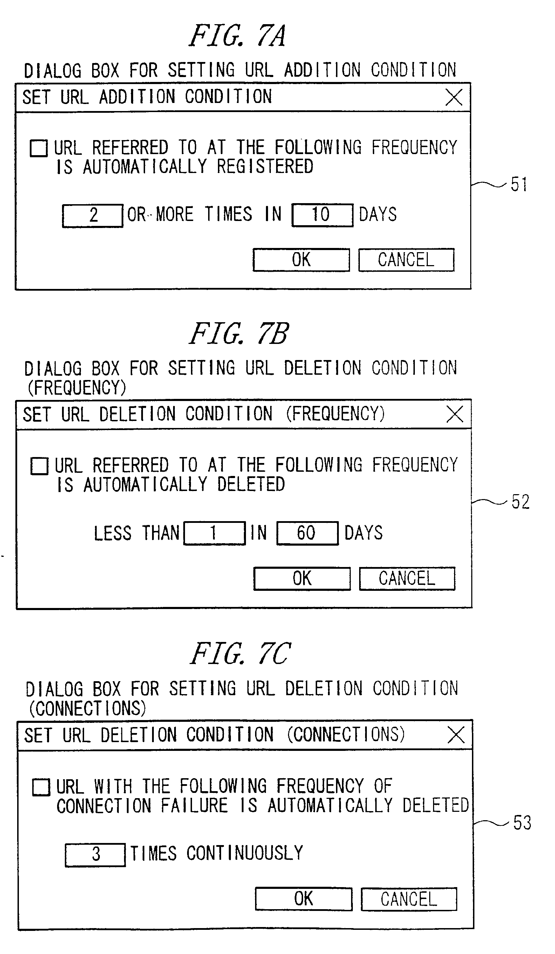

The above described three conditions of addition or deletion can be set by the user. Figs. 7A, 7B, and 7C show examples of a display of graphical images for setting addition and deletion conditions. Fig. 7A shows a graphical image 51 for setting the URL addition condition (setting dialog box), Fig. 7B shows a graphical image 52 for setting the URL deletion condition (frequency), and Fig. 7C shows a graphical image 53 for setting the URL deletion condition (connections).

Each of setting dialog boxes 51 to 53 is displayed on the screen of the monitor 9 by the CPU 2 executing a program (corresponding to the supply section of the invention) when the user performs a setting dialogue box calling operation by using the input device 10. Calling-up of each of setting dialog boxes 51 to 53 does not necessarily presuppose an active state of browser 21. However, browser 21 is assumed to be active when one of the setting dialog boxes 51 to 53 is called up.

Through setting dialog box 51, the user can set a mode by determination whether or not an addition of a URL will be automatically performed. That is, an automatic URL addition mode is set only when the user checks "URL referred to at the following frequency will be automatically registered" in setting dialogue box 51.

Setting dialog box 51 has input portions for inputting a predetermined time period and a certain number of instances of success in connection (instances of reference) in the predetermined time period. The user can set any numerals in the input portions and click an OK button to set the Web site reference frequency as a URL addition condition. When the OK button is clicked, the set URL addition condition is newly entered or overwritten in condition list 26.

In the example of the display shown in Fig. 7A, the URL addition condition is such that if a Web site is referred to two or more times in ten days, the URL of the Web site is automatically registered in URL list 22.

Through each of setting dialog boxes 52 and 53, the user can set a mode by determination whether or not the deletion of a URL will be automatically performed. That is, an automatic URL deletion mode is set only when the user checks "URL will be automatically deleted" in setting dialogue box 52 or 53.

Setting dialog box 52 has input portions for inputting a predetermined time period and a certain number of connection trials (references) in the predetermined time period. The user can set any numerals in the input portions and click an OK button to set the reference frequency as a URL deletion condition (frequency). When the OK button is clicked, the set URL deletion condition (frequency) is newly entered or overwritten in condition list 26.

In the example of the display shown in Fig. 7B, the URL deletion condition (frequency) is such that if the number of times a Web site having a registered URL has been read (referred to) is less than once in sixty days, the URL of the Web site is automatically deleted from URL list 22.

Setting dialog box 53 has an input portion for inputting the number of continuous occurrences of connection failure. The user can set any numeral in the input portion and click an OK button to set the number of continuous occurrences of connection failure (access failure) as a URL deletion condition (conditions). When the OK button is clicked, the set URL deletion condition (connections) is newly entered or overwritten in condition list 26.

In the example of the display shown in Fig. 7C, the URL deletion condition (connections) is such that, in a case where each of three trials continuously made for connection to a Web site having a registered URL has resulted in failure, the URL of the Web site is automatically deleted from URL list 22.

Further, if a certain condition is satisfied, updating section 25 reads out a URL from URL list 22, executes a trial for connection to the URL, and executes automatic URL deletion processing according to the result of the connection trial.

### <Example of Operation of Address Management Apparatus>

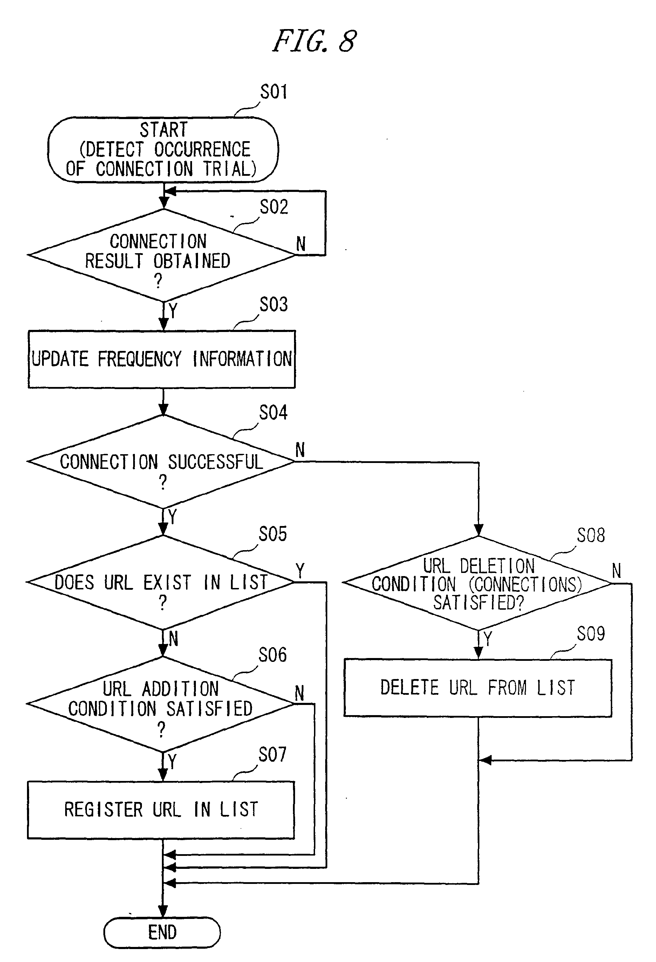

An example of the operation of the above-described address management apparatus will be described with reference to the flowcharts of Figs. 8 to 10.

### (First Example of Operation)

Fig. 8 is a flowchart showing a first example of the operation of the address management apparatus. The first example of the operation presupposes that browser 21 is active and the computer 1 is connected to the internet 12.

Monitoring section 23 monitors to detect occurrence of access to a URL by browser 21 as a start condition for the first example of the operation. When a connection command is input through the input device 10 (inputting and entering of a URL, mouse clicking of a URL in a Hyperlink setting, or the like), browser 21 tries to establish a connection to the designated URL, thereby starting the first example of the operation.

First, monitoring section 23 detects a connection trial made by browser 21 (S01). Monitoring section 23 waits for the result of the connection trial (S02). After recognizing the result (S02: Y), monitoring section 23 updates table 24 according to the result (S03).

More specifically, if the connection result is "success", monitoring section 23 records, with respect to the URL as the target of the connection trial, the date of the connection trial in the "connection trial records" in table 24 at the corresponding position, and deletes the corresponding content of "continuous connection failure records". If the connection result is "failure", monitoring section 23 records, with respect to the URL as the target of the connection trial, the date of the connection trial in the corresponding section in the "continuous connection failure records".

Next, updating section 25 makes a determination (S04) whether or not the connection trial has resulted in success. The process advances to step S05 if the result of the determination is "success", or the process moves to step S08 if the result of the determination is "failure".

In step S05, updating section 25 makes a determination, by referring to URL list 22, whether or not the URL with which the successful connection result has been determined has already been registered in URL list 22. If it is determined that the corresponding URL has already been registered in URL list 22 (S05: Y), the first example of the operation stops.

If the corresponding URL has not been registered in URL list 22 (S05: N), updating section 25 makes a determination (S06) whether or not the URL addition condition is satisfied by referring to the "connection trial record" corresponding to the URL concerned and by referring to the URL addition condition in condition list 26.

If the URL addition condition is not satisfied at this time (S06: N), the first example of the operation stops. If the URL addition condition is satisfied (S06: Y), updating section 25 adds the URL to URL list 22 (S07).

That is, if browser 21 is, for example, "Internet Explorer", updating section 25 forms a text file containing information on the URL and stores the text file in the folder corresponding to URL list 22. Alternatively, if browser 21 is the "Netscape Navigator", updating section 25 executes updating processing for setting information on the URL in the file "bookmark.htm".

As described above, automatic URL addition is executed. Thereafter, if the list 50 or 50a is called up by the operation of the input device 10, a name of the Web site having the URL automatically added is displayed in the list 50 or 50a as a name related to the URL. However, the URL itself may alternatively be displayed in list 50 or 50a. The first example of the operation stops thereafter.

When the process moves to step S08, updating section 25 makes a determination whether or not the number of continuous occurrences of connection failure satisfies the URL deletion condition (connections) by referring to the "continuous connection failure record" relating to the URL with which connection failure has been determined, and by referring to condition list 26.

If it is determined that the URL deletion condition (connections) is not satisfied (S08: N), the first example of the operation stops. If the URL deletion condition (connections) is satisfied (S08: Y), updating section 25 deletes the URL from URL list 22.

That is, if browser 21 is, for example, "Internet Explorer", updating section 25 deletes a text file containing information on the URL from the folder corresponding to URL list 22. Alternatively, if browser 21 is "Netscape Navigator", updating section 25 executes updating processing for deleting information on the URL from the file "bookmark.htm". The first example of the operation stops thereafter.

In the first example of the operation, monitoring section 23 of the address management apparatus monitors the state of references to Web sites (connections (access) to URLs) made by browser 21, and forms table 24 on the basis of the results of the monitoring, thereby obtaining connection trial records (reference records) and continuous connection failure records (the number of continuous occurrences of connection failure).

Thereafter, updating section 25 executes processing for automatically adding a URL to URL list 22 or automatically deleting a URL from URL list 22 by referring to table 24 and to condition list 26. Thus, it is possible to update URL list 22 without a user's voluntary operation. That is, a URL with a high user reference frequency can be automatically registered and a URL with a low user reference frequency can be automatically deleted. Thus, the processing load on the user with respect to URL list 22 can be lightened.

### (Second Example of Operation)

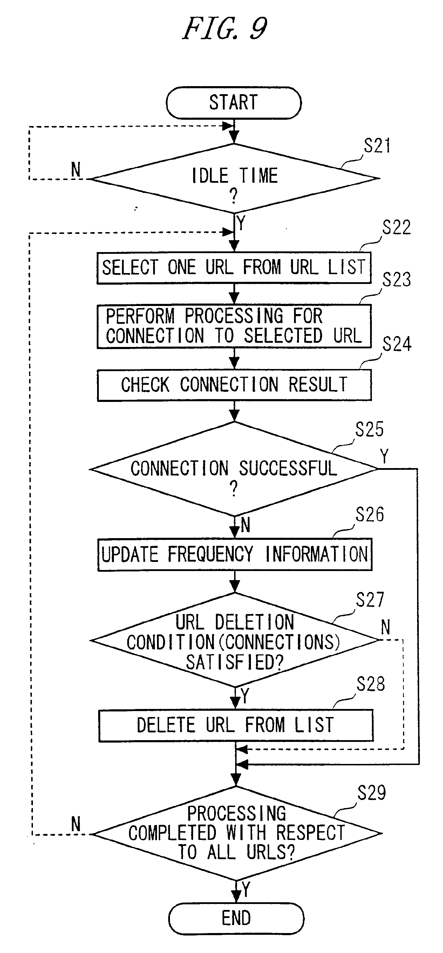

Fig. 9 is a flowchart showing a second example of the operation of the address management apparatus. The second example of the operation presupposes that browser 21 is active and the computer 1 is connected to the internet 12.

In a case where no connection trial is made over a predetermined time period, monitoring section 23 determines this time period as "idle time" (S21: Y). Then, updating section 25 selects one URL from URL list 22 (S22). That is, if browser 21 is, for example, "Internet Explorer", updating section 25 reads out a text file containing information on one URL from URL list 22. Alternatively, if browser 21 is "Netscape Navigator", updating section 25 analyzes the file "bookmark.htm" and identifies information on one URL from "bookmark.htm".

Next, updating section 25 executes processing (connection trial) for establishing a connection to the URL using the identified URL (S23). After confirming the result of this connection trial (S24), updating section 25 makes a determination whether or not the connection trial has succeeded in establishing the connection (S25). In the case of success in establishing the connection, the process moves to step S29. In the case of connection failure, the process advances to step S26.

In step S26, updating section 25 updates the content of the section in the "continuous connection failure records" with respect to the URL in table 24. Updating section 25 then makes a determination (S27) whether or not, as a result of updating of the "continuous connection failure records", the content of the corresponding "continuous connection failure record" satisfies the URL deletion condition (connections) in condition list 26.

If the URL deletion condition (connections) is not satisfied (S27: N), the process moves to step S29. If the URL deletion condition (connection) is satisfied (S27: Y), updating section 25 deletes the URL from URL list 22 (S28).

In step S29, a determination is made whether or not the processing of steps S22 to S28 (connection confirmation processing) has been completed with respect to all the URLs registered in URL list 22. If the processing has been completed, the second example of the operation stops. If the processing has not been completed, the process returns to step S22, and the connection confirmation processing is executed with respect to the next URL. In the case where a connection trial by browser 21 has occurred during the operation described above with reference to the flowchart of Fig. 9, the second example of the operation is forcefully terminated.

In the second example of the operation, if a certain idle time is determined, connection confirmation processing is executed with respect to one or a plurality of URLs registered in URL list 22, and a URL with the number of continuous occurrences of connection failure satisfying the URL deletion condition (connections) is automatically deleted from URL list 22.

If the URL deletion condition (connections) is satisfied, it is thought that the Web site having the corresponding URL has been relocated or extinguished. Therefore, the user allows the URL that has become unnecessary to be automatically deleted from URL list 22.

### (Third Example of Operation)

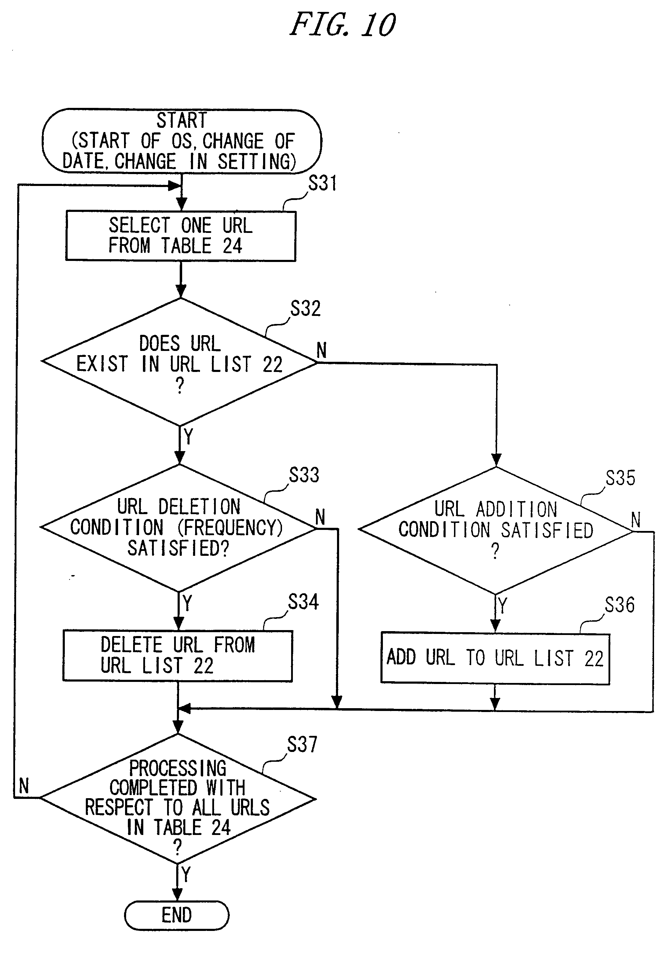

Fig. 10 is a flowchart showing a third example of the operation of the address management apparatus. The third example of the operation is started when the operating system (OS) is activated, when the date is changed while the OS is running, or when the addition/deletion condition setting is changed while the OS is running.

First, updating section 25 selects one URL from table 24 (S31).

Next, updating section 25 makes a determination (S32) whether or not the selected URL has been registered in URL list 22. If the URL has been registered in URL list 22 (S32: Y), the process advances to step S33. If the URL has not been registered in URL list 22 (S32: N), the process moves to step S35.

In step S33, updating section 25 refers to the "continuous connection failure record" in table 24 and the URL deletion condition (frequency) in condition list 26 with respect to the URL selected in step S31. If the URL deletion condition (frequency) is not satisfied (S33: N), the process moves to step S37. If the URL deletion condition (frequency) is satisfied (S33: Y), updating section 25 deletes the URL from URL list 22 (S34).

On the other hand, in step S35, updating section 25 refers to the "connection trial record" with respect to the URL in table 24 selected in step S31, and also refers to the URL addition condition in condition list 26. If the URL addition condition is not satisfied (S35: N), the process moves to step S37. If the URL addition condition is satisfied (S35: Y), updating section 25 adds the URL to URL list 22 (S36).

Thereafter, in step S37, a determination is made whether or not the processing of steps S31 to S36 has been completed with respect to all the URLs in table 24. If the processing has been completed, the third example of the operation stops. If the processing has not been completed, the process returns to step S31.

In the third example of the operation, updating section 25 updates the contents of URL list 22 by referring to table 24 and condition list 26 if one of the above-described three conditions (activation of the OS, a date change during running of the OS, and a change in the addition/deletion condition setting during running of the OS) is satisfied. Thus, the contents of URL list 22 can be optimized without a user's voluntary processing.

### <Operation of First Embodiment>

In the address management apparatus according to the first embodiment, processing for updating URL list 22 is automatically performed by one of the above-described first to third examples of the operation. Thus, the processing load on a user with respect to URL list 22 can be lightened. Consequently, it is possible to provide a more comfortable utilization environment for users of the internet 12.

### Second Embodiment

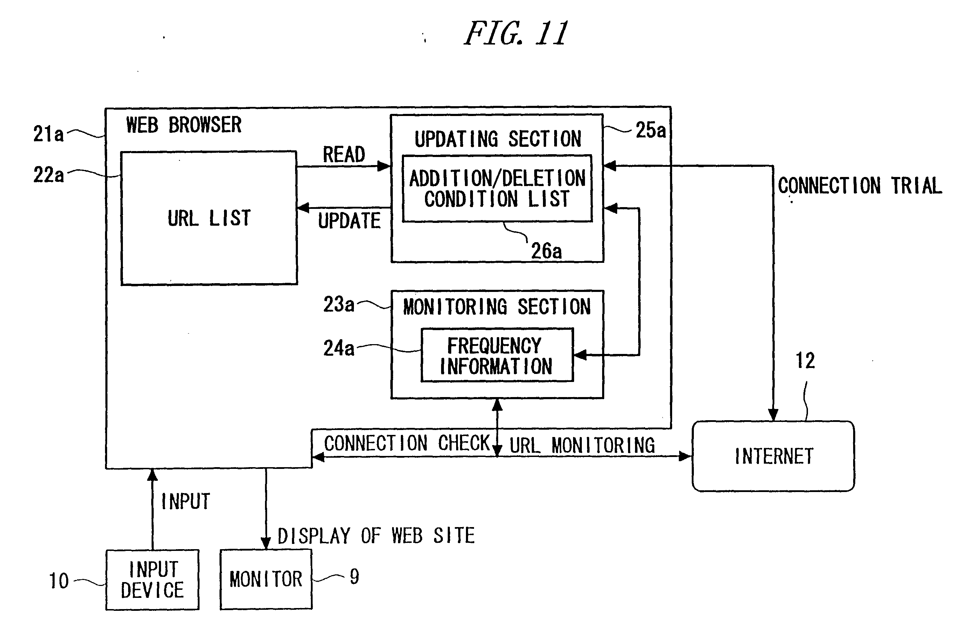

Next, a second embodiment of the present invention is described. Fig. 11 is a functional block diagram of an address management apparatus in the second embodiment of the present invention. The second embodiment has monitoring section 23 and updating section 25 of the first embodiment incorporated as functions of browser 21. Components of the second embodiment identical or corresponding to those of the first embodiment are indicated by reference characters consisting of the same numerals shown in Fig. 2 and a suffix "a".

The second embodiment can be realized by using the same hardware construction described above with respect to the first embodiment. Monitoring section 23a, frequency information table 24a, updating section 25a and addition/deletion condition list 26a shown in Fig. 11 have substantially the same configurations as the corresponding sections in the first embodiment, and the same first and third examples of the operation are performed.

Therefore, the second embodiment has substantially the same functions and effects as the first embodiment. In the first embodiment, however, the programs for realizing monitoring section 23 and updating section 25 can be separately recorded on a recording medium to be provided as browser assistant software. In contrast, in the second embodiment, it is necessary to provide the corresponding sections as a Web browser having automatic URL updating functions.

### Modifications of Embodiments

In the described embodiments, programs for realizing the address management apparatus are stored on hard disk 11. Alternatively, the address management apparatus may be realized in such a manner that the programs are held on a portable recording medium such as a compact disk-read only memory (CD-ROM) or a floppy disk, the CPU 2 reads out and executes the programs held on such a recording medium, or in such a manner that the programs stored in an external computer are downloaded to the apparatus via a network.

Monitoring section 23 and updating section 25 of the first embodiment have been described as sections distinctively separate from each other. However, it is not necessary to distinctively form monitoring section 23 and updating section 25. Monitoring section 23 and updating section 25 may be formed integrally with each other to perform at least one of the first to third examples of the operation.

This invention being thus described, it will be obvious that the same may be varied in various ways. Such variations are not to be regarded as departure from the spirit and scope of the invention, and all such modifications would be obvious for one skilled in the art intended to be included within the scope of the following claims.

## Claims

1. An apparatus for managing addresses of Web sites, comprising:
an address list containing addresses of Web sites;
a monitoring section for monitoring the state of references to Web sites; and
an updating section for updating the contents of said address list according to the state of references monitored by said monitoring section.

2. An apparatus for managing addresses of Web sites according to Claim 1, further comprising a connection section for accessing to an address contained in said address list in case the address is designated.

3. An apparatus for managing addresses of Web sites according to Claim 1, wherein said monitoring section records the frequency of access to the address of each Web site as a content of said state of references, and said updating section adds, to said address list, an address with an access frequency reached to a predetermined threshold value.

4. An apparatus for managing addresses of Web sites according to Claim 1, wherein said monitoring section records the frequency of access to the address of each Web site as a content of said state of references, and said updating section deletes, from said address list, any of the addresses in said address list with an access frequency lower than a predetermined threshold value.

5. An apparatus for managing addresses of Web sites according to Claim 1, wherein, if the number of times access failure has occurred with respect to one of the addresses contained in said address list becomes equal to a predetermined threshold value, said updating section deletes the address from said address list.

6. An apparatus for managing addresses of Web sites according to Claim 3, wherein the access frequency with respect to each of the Web sites is updated each time access to the Web site results in success, and wherein, when the access frequency is updated, said updating section makes a determination whether or not the access frequency has reached the predetermined threshold value.

7. An apparatus for managing addresses of Web sites according to Claim 5, wherein said updating section has a line is connected for reference to the Web sites, and wherein, if no input is supplied over a predetermined time period with respect to reference to any of the Web sites, said updating section tries to access each of the addresses contained in said address list, and deletes the address from said address list if the number of times failure has occurred continuously becomes equal to a predetermined threshold value by failure of said trial.

8. An apparatus for managing addresses of Web sites according to any one of Claims 3 to 5, further comprising a supply section for supplying a user with a setting window to enable the user to set the predetermined threshold value.

9. An apparatus for managing addresses of Web sites according to Claim 3 or 4, wherein said updating section is activated when an operating system for controlling said address management apparatus is activated.

10. An apparatus for managing addresses of Web sites according to Claim 3 or 4, wherein the access frequency is the number of occurrences of access in a unit number of days, and said updating section is activated when the date is changed.

11. An apparatus for managing addresses of Web sites according to Claim 8, wherein said updating section is activated when the setting of the predetermined threshold value is changed by the user.

12. A method of managing addresses of Web sites, comprising:
a monitoring step of monitoring the state of references to Web sites made by a user; and
an updating step of updating the contents of an address list containing the addresses of the Web sites according to the state of references monitored in said monitoring step.

13. A recording medium comprising a program recorded thereon, said program for managing addresses of Web sites, wherein said program executes the steps of:
a monitoring step of making a computer monitor the state of references to the Web site made by a user; and
an updating step of updating the contents of an address list containing the addresses of the Web sites according to the results of monitoring performed in said monitoring step.

14. A computer program or a computer program product for carrying out any of the methods disclosed herein, or a computer readable medium having stored thereon a computer program for carrying out any of the methods disclosed herein.
